(19) Europäisches Patentamt
European Patent Office
Office européen des brevets

(11)  EP 2 138 047 B1

(12)  EUROPEAN PATENT SPECIFICATION

(45) Date of publication and mention
of the grant of the patent:
**13.04.2011  Bulletin 2011/15**

(51) Int Cl.:
***A23G 1/00*** *(2006.01)*        ***A23G 1/02*** *(2006.01)*

(21) Application number: **09163778.5**

(22) Date of filing: **25.06.2009**

(54) **Method for flavouring cocoa beans**

Verfahren zur Aromatisierung von Kakaobohnen

Procédé d'aromatisation de grains de cacao

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **27.06.2008  EP 08159262**

(43) Date of publication of application:
**30.12.2009  Bulletin 2009/53**

(73) Proprietor: **Barry Callebaut AG
8005 Zurich (CH)**

(72) Inventors:
• **Bernaert, Herwig
9280 Lebbeke-Wieze (BE)**
• **Camu, Nicholas
9280 Lebbeke-Wieze (BE)**
• **Lohmüller, Tobias
9280 Lebbeke-Wieze (BE)**

(74) Representative: **Michalík, Andrej et al
De Clercq & Partners cvba
E. Gevaertdreef 10a
9830 Sint-Martens-Latem (BE)**

(56) References cited:
• **ZIEGLER E., ZIEGLER H. EDS.: "Flavourings"
1998, WILEY-VCH , XP002523443 ISBN:
3-527-29786-3 * page 470 ***
• **BECKETT S.T.: "The Science of Chocolate.
Chapter 3. Cocoa Bean processing" 2004, RS C ,
XP002523444 ISBN: 0-85404-600-3 * page 31 -
page 48 ***

## Description

### Field of the invention

The present invention relates to a method for flavouring cocoa beans, and to cocoa beans thereby obtained. In particular, the present invention advantageously provides a method for flavouring cocoa beans using natural flavouring product, in particular unroasted, natural flavouring plant material, as an alternative to a conventional flavouring using artificial or synthetic flavouring substances. The invention further relates to cocoa beans obtained by the method of the present invention, to the use of said cocoa beans in food products, and in particular in chocolate products, or cocoa extracts and to the food products, chocolate products or cocoa extracts thereby obtained.

### Background

Cocoa beans are the principal raw material for chocolate production. These beans are derived from the fruit pods of the tree *Theobroma* cacao, which is cultivated in plantations in the equatorial zone, e.g., in Ivory Coast, Ghana, and Indonesia. The cocoa beans are embedded in a mucilaginous pulp inside the pods. Raw cocoa beans have an astringent, unpleasant taste and flavour, and have to be microbially fermented, dried, and roasted to obtain the desired characteristic cocoa flavour and taste.

Chocolate is generally obtained by mixing sugar and cocoa butter with cocoa liquor or cocoa nibs, followed by refining, conching and tempering. Milk chocolate is prepared in a similar way but with the addition of milk or milk powder.

Chocolate flavour is influenced by the origin of the cocoa beans, the cocoa cultivars, the on-the-farm fermentation and drying process, and the roasting and further processing performed by the chocolate manufacturer. Local chocolates are often unique and contain flavours that are important for the consumer and it has been known for many years to add flavours to chocolate. Techniques have been disclosed in the art to manipulate the flavour of chocolate. One technique for instance comprises the addition of an effective amount of a flavouring agent to the chocolate mass during preparation. For instance, chocolate can be flavoured with alcohol-based extracts, liqueurs, flavoured oils or synthetic flavouring agents. Some manufacturers produce chocolate by using chocolate ingredients and a process which only gives one flavour attribute to give a specific house flavour and the manufacturing plants are only able to produce a limited variation around this flavour.

The present invention is directed to another approach for flavouring chocolate. In particular, the present invention aims to provide a novel method for treating cocoa beans, and in particular to flavour cocoa beans, and further aims to prepare chocolate products from these flavoured cocoa beans.

### Summary

The present invention is directed to a method for flavouring dried cocoa beans, to flavoured cocoa beans thereby obtained and to various uses thereof. More in particular, the present method aims to provide flavoured cocoa beans which remain flavourful for extended periods of time, and which can be used for preparing flavoured chocolate and other flavoured products. The present method permits to prepare chocolate products which retain the flavour that has been introduced to the cocoa beans.

In particular, the invention provides a method for flavouring cocoa beans comprising the step of contacting dried cocoa beans with unroasted, natural flavouring plant material. Said unroasted, natural flavouring plant material comprises fruit and/or non-fruit plant material selected from the group comprising herbs, spices, leaves, grasses, flowers and any combinations thereof.

In a first aspect, the present invention therefore provides a method for flavouring cocoa beans comprising the steps of:

    a) providing dried cocoa beans,
    b) contacting said dried cocoa beans with unroasted natural flavouring plant material, and
    c) separating the cocoa beans from said unroasted natural flavouring plant material.

In a preferred embodiment a method is provided, wherein said dried cocoa beans are contacted with said unroasted natural flavouring plant material for less than four days.

In another preferred embodiment a method is provided, wherein said dried cocoa beans are contacted in step b) with said unroasted natural flavouring plant material at a temperature of between 20 and 120 °C.

Optionally, the method further comprises the step of drying the cocoa beans obtained in step c).

In a preferred embodiment, said unroasted natural flavouring plant material is selected from the group comprising fruits, herbs, leaves, grasses, spices, flowers and any combinations thereof.

Said unroasted natural flavouring plant material can be provided as a whole, cut in pieces, either dried or not, either diluted or not, as an extract, as a concentrate, and any combinations thereof. In one embodiment said unroasted natural flavouring plant material is applied in the form of an aqueous solution of said material.

In one particular embodiment of the present invention, the method comprises the step of contacting said dried cocoa beans with unroasted natural flavouring plant material is a fruit. Said fruit may consist of a fruit juice, a fruit extract, a fruit concentrate, whole fruits and/or fruit segments.

In an embodiment, said fruit is obtained from plants of the *Rutaceae* family, and preferably selected from the group comprising orange, lemon, mandarin, clementine, grapefruit, pummelo, lime, tangerine, limonene, Minneola, tangelos, kumquats, ugh fruit, Satsuma oranges and combinations thereof.

In another particular embodiment or in combination therewith the method comprises the step of contacting said dried cocoa beans with unroasted natural flavouring plant material is a non-fruit plant material. Said non-fruit plant material is preferably selected from the group comprising herbs, spices, leaves, grasses, flowers and combinations thereof.

In an embodiment, said herb or said spice is obtained from plants of the family *Lamiaceae,* and preferably selected from the group comprising basil, lemon balm, mint, peppermint, rosemary, sage, savory, marjoram, oregano, thyme, lavender, and perilla.

In another embodiment said leaves are obtained from plants of the family *Theaceae,* preferably the order of *Camellia* and more preferably selected from the group comprising *C. sinensis, C. taliensis* and *C. irrawadiensis.*

In yet another embodiment, said flowers are obtained from the group comprising flowers of rose, jasmine, lavender, hibiscus, orange flowers, chamomile, passion flower, rosemary flower and any combinations thereof.

The present invention thus provides a highly efficient method for flavouring cocoa beans with a minimum of energy requirements and maintaining a maximum of the own flavour of the dried beans as well as the infused flavour.

The applicants have surprisingly found that in accordance with the present method flavoured cocoa beans can be obtained, that the flavours remain in the cocoa beans and that the flavour is subsequently also transmitted from the cocoa beans to products such as chocolate products prepared from these flavoured cocoa beans.

Moreover, the present method is based on the use of *natural* flavouring substances, i.e. plant material that is already naturally flavoured without the need of pre-treating this material to obtain a flavour. Further, in this respect, the invention also avoids the need of using artificial or synthetic flavouring agents for flavouring cocoa beans.

In addition, it is surprising that using unroasted plant material provides satisfying flavouring effects, as it is generally known in the art that roasting aims at and improves flavour formation of a roasted material.

Moreover the present method is easy to carry out, and will be less energy intensive than known infusion techniques where large energy inputs are required. Furthermore, the present invention can be applied to all types of cocoa beans, including fermented and unfermented cocoa beans. In addition, another important advantage of the present invention, especially when carried out on unfermented cocoa beans, it that the present method permits to obtain highly-flavoured cocoa products.

The Applicants thus provide an easy, simple, fast, and natural way of bringing flavouring aromas into cocoa beans and chocolate without having to rely on expensive artificial and synthetic flavouring agents.

Having regard to the prior art in the present technical field of flavouring cocoa beans, the present method can be considered as unconventional and unusual, especially since the prior art in this field typically teaches a different approach for flavouring products, i.e. by the addition of synthetic flavouring materials, and moreover by the addition of flavours during downstream processing when preparing food products such as chocolate, from cocoa beans. Contrary to what is taught in the prior art, the present method is directed to the addition of natural flavouring material, thus no synthetic materials, prior to cocoa beans downstream processing to food products and not during this downstream processing.

In a second aspect, the invention therefore also relates to flavoured cocoa beans. By applying a method according to the invention high-flavoured cocoa products having a controllable, reproducible and adjustable composition are obtained. In a preferred embodiment, the invention relates to cocoa beans that are obtained or obtainable by a method according to the invention.

More in particular, the invention provides flavoured cocoa beans having an amount of components selected from the group comprising aroma compounds, aroma precursor, ester-precursors, free amino acid precursors, aromatic bioactive molecules, alkaloid compounds, sugars, carbohydrates, and enzymes which is at least 10 % higher or at least 10 % lower than in cocoa beans that have not been contacted with unroasted natural flavouring plant material.

In another aspect, the invention also relates to cocoa beans obtained or obtainable by carrying out the methods of the present invention and to uses thereof, e.g. for preparing cocoa products such as cocoa powder, cocoa extract, cocoa liquor, cocoa mass, cocoa butter and cocoa cake, and/or for preparing food products, such as chocolate products.

The invention further relates to a cocoa product selected from the group comprising cocoa powder, cocoa extract, cocoa liquor, cocoa mass, cocoa butter and cocoa cake, prepared with one or more cocoa beans according to the invention, and to uses thereof, e.g. for preparing food products such as chocolate products.

Moreover, in yet another aspect, the invention also relates to the use of cocoa beans according to the invention for the preparation of food products, preferably chocolate products, and to a method for preparing food products, such as chocolate products, comprising processing cocoa beans according to the invention.

In still another aspect, the invention also relates to the use of cocoa beans according to the invention for the preparation of cocoa extracts, and to a method for preparing a cocoa extract comprising processing cocoa beans according to the invention.

The invention further provides a food product, preferably chocolate products, prepared with one or more of cocoa beans according to the invention, and to various uses of such food product.

The invention also further provides a cocoa extract prepared with one or more of cocoa beans according to the invention and to various uses of such cocoa extract.

With the insight to better show the characteristics of the invention, some preferred embodiments and examples are described hereafter.

## Description of the drawings

Figure 1 illustrates the moisture content of unfermented beans (Lavados beans) during the first 24 hours wherein they were contacted with three types of diluted fruit juice derived from oranges.

Figure 2 illustrates the moisture content of fermented beans during the first 24 hours wherein they were contacted with three types of diluted fruit juice derived from oranges.

**Figure 3** shows the results of a taste panel conducted in the experiment described in example 7.

**Figure 4** shows the results of a taste panel conducted in the experiment described in example 8.

**Figure 5** shows the results of a taste panel conducted in the experiment described in example 9.

**Figure 6** shows the results of a taste panel experiment conducted on unfermented cocoa beans that have not been treated with an unroasted natural flavouring plant material.

## Description of the invention

The present invention is directed to a method for flavouring cocoa beans using unroasted natural flavouring plant material and flavoured beans thereby obtained.

While the present invention primarily relates to the flavouring of cocoa beans of the major cocoa plant species, *Theobroma cacao,* the invention is not limited solely to this species and further includes the subspecies *T. cacao cacao* and *T. cacao sphaerocarpum.* For example, many cocoa varieties are hybrids between different species; an example of such a hybrid is the trinitario variety. In accordance with the present invention cocoa beans obtained from various varieties such as Criollo, Forastero or Trinitario may therefore be used.

The term *"cocoa beans"* as used herein is intended to refer to cocoa beans or cocoa seeds as such as well as parts thereof and includes cocoa nibs.

Cocoa beans that may be flavoured in accordance with the present method are fermented cocoa beans or unfermented cocoa beans. The term *"unfermented"* cocoa beans used herein is intended to refer to cocoa beans that have been liberated from cocoa pods and that have not yet germinated. *"Fermented cocoa beans"* in this context refers to cocoa beans that have undergone a conventional fermentation process, i.e. while surrounded by their pulp. In particular, *"fermented cocoa beans"* as used herein refers to cocoa beans that have been fermented for at least two days. The term *"conventional fermentation process"* refers to a fermentation process according to techniques known in the prior art and for a duration of at least two days.

METHOD for flavouring cocoa beans

The present method for flavouring cocoa beans in general comprises the steps of:

a) providing dried cocoa beans,
b) contacting said dried cocoa beans with unroasted natural flavouring plant material, and
c) separating the cocoa beans from said unroasted natural flavouring plant material.

4

In addition, in a further optional embodiment, the present method also comprises the step of drying the cocoa beans obtained in step c).

The present invention is preferably directed to a method for flavouring dried cocoa beans; i.e. the cocoa beans treated in step a) of the present method are dried beans. Preferably cocoa beans can be dried by means of conventional drying techniques such as e.g. sun, microwave, and hot air, commonly known in the art. Preferably, the dried cocoa beans of step a) of the method of the invention have a moisture content of less than 10%, especially 9, 8, 7, 6, or 5%.

In one embodiment, the present method is carried out on cocoa beans which comprise dried essentially whole cocoa beans. With "essentially whole" cocoa beans is meant that more than 60%, preferably more than 65, 70, 75, 80, 85, 90, or 95 % by weight of the beans in a batch of beans are not broken.

In another embodiment, the present method is carried out on cocoa nibs.

In one embodiment, the method comprises contacting said dried cocoa beans with said unroasted natural flavouring plant material for less than four days, and for instance for less than three days, less than two days or less than one day, and for instance for less than 12 hour. In an embodiment, the invention provides a method which comprises the step of contacting said dried cocoa beans with said unroasted natural flavouring plant material for a time period comprised between 4 and 48 hours, and preferably comprised between 8 and 24 hours.

The dried beans provided in step a) preferably have a moisture content of less than 10%, especially 9, 8, 7, 6, or 5%. In a preferred embodiment, according to the present process, these dried cocoa beans are contacted with unroasted natural flavouring plant material for an adequate period of time until they obtain a moisture content of at least 20%, and preferably of between 25 and 35%, and more preferably of 30%. In an example, an adequate period of contact time comprises between 4 and 48 hours, and preferably between 8 and 24 hours.

In yet another embodiment, the present method comprises the step of contacting in step b) said cocoa beans with said unroasted natural flavouring plant material at a temperature of between 20 and 120 °C, and for instance at a temperature of 25°C or higher, or a temperature of 40°C or higher, or a temperature of 50°C or higher. Thus, in a particular embodiment of the present method, said unroasted natural flavouring plant material is heated together with the cocoa beans in step b) preferably to a temperature higher than 20°, preferably higher than 40°C. In such case, cocoa beans which are heated in the presence of said flavouring plant material can adsorb the (volatile) flavours released by said material out of the air. Preferably according to such embodiment, no further drying of the cocoa beans is required after separation of the beans from the unroasted plant material in step c).

The present method involves the addition of said unroasted natural flavouring plant material as a whole, in pieces, either dried or not, either diluted or not, as an extract, as a concentrate, and any combinations thereof.

Dilution of unroasted natural flavouring plant material according to the invention may be prepared by techniques known by a person skilled in the art using a suitable medium such as e.g. water. Concentrates of unroasted natural flavouring plant material according to the invention may also be prepared by techniques known by a person skilled. Extracts of unroasted natural flavouring plant material according to the invention may be prepared by techniques known by a person skilled in the art using an extraction medium such as water, mixtures of water and one or more polar solvents such as lower alcohols, e.g. methanol and ethyl alcohol, acetone, or supercritical gases such as carbon dioxide, nitrogen or other inert gases.

The plant material may comprise fruit and/or non-fruit material. In a preferred embodiment, said unroasted natural flavouring plant material is selected from the group comprising fruits, herbs, leaves, grasses, spices, flowers and any combinations thereof. Natural flavouring materials which may be put into practice in the present invention will be described in more detail hereunder. It shall be clear however, that all natural flavouring materials as put into practice in the present invention are used under non-toxic conditions or concentrations.

In one embodiment the present method comprises the step of applying said unroasted natural flavouring plant material in step b) of the present method in the form of an aqueous solution of said material. In such embodiment, the unroasted natural flavouring plant material applied in step b) may be diluted with a suitable solvent such as e.g. water, or may be applied as an extract or as a concentrate.

In an embodiment, the present method comprises the step of applying said unroasted natural flavouring plant material in step b) of the present method in the form of an aqueous solution of said material, e.g. it is diluted with water, having a concentration comprised between 0.1 and 5 wt%, and for instance between 0.2 and 2.5 wt% or between 0.5 and 1.5 wt%.

In another embodiment, the present method comprises the step of contacting said unroasted natural flavouring plant material with said dried cocoa beans in step b) at a weight ratio of cocoa beans to unroasted natural flavouring plant material which is comprised between 25:1 and 5:1 and for instance between 20:1 and 5:1 or between 15:1 and 10:1.

Unroasted natural flavouring plant material

The term *"natural flavouring plant material"* as used herein refers to any plant material that is capable of providing a flavour. This term refers to plant material that does not contain any artificial or synthetic flavouring substance or that has not been coated, filled, or contacted with any artificial or synthetic flavouring substance. Such natural flavouring plant material can be used in non-dried plant form or it can also be used in dried form. The natural flavouring plant material may be used as a whole or it can be cut, pitted, cored, stoned and/or peeled.

The term *"plant material"* may include but is not limited to any plant or part thereof including fruits (fructus), leafs (folium), seed fruits (fructus s. semen), roots (radix), barks (cortex), branches, blossoming branches, seed (semen), rootstocks (rhizoma), root and herb (radix cum herba), stalks, the whole plant, tuber (tuber), bulb (bulbus), pericarpium, stramentum, flowers (flos), leafs and bloom (folium cum flores), stipites, stigma, lignum, strobulus, thallus, aboveground parts, blossoming aboveground parts, underground parts, and/or any parts of this and/or any mixture thereof.

The term *"unroasted"* as used herein refers to the fact that said plant material has not been subjected to a roasting process.

In one aspect of the invention, the unroasted natural flavouring plant material used in the present invention is a fruit. The term *"fruit'* as used herein is intended to refer to the ripened ovary, together with seeds if present, of a flowering plant. The term "fruit" as used herein encompasses the fruit as such, as well as any part thereof including e.g. the "fleshy" parts of the fruit, the seeds of the fruit, the fruit peels, etc.

Fruits as used herein may refer to whole fruit, fruit cut in fruit segments, pressed fruit, cored fruit, peeled fruit, and/or fruit parts such as fruit seeds or peels, for all embodiments herein described. *"Cored fruit"* refers to fruit of which the central inedible part has been removed and include fruits of which seeds, pits, stones, or other inedible parts have been removed. In another aspect, the invention may encompass the use of fruits as defined herein in the form of a fruit juice, a fruit extract and/or a fruit concentrate.

The presently claimed invention may use any fruit capable of providing a flavour, including any variety of fruit or combination of fruits. One of skill in the art would recognize that the present invention may be practiced with fruit that is cultivated, organic, a hybrid cross, or a wild cultivar.

In one embodiment of the present invention, the fruit may be a simple fruit, an aggregate fruit or a multiple fruit. Simple fruits refer to fruits which result from the ripening of a simple or compound ovary with only one pistil. An aggregate fruit develops from a flower with numerous simple pistils. A multiple fruit is one formed from a cluster of flowers (called an *inflorescence),* whereby each flower produces a fruit, but these mature into a single mass.

There are no limitations towards to form wherein said fruit is added to the cocoa beans. Said fruit may e.g. added as a whole, in pieces, either dried or not, either diluted or not, as an extract, as a concentrate, and any combinations thereof.

Fruits that may be used in the method of the present invention can be selected form the group comprising apples, pears, rosehips, cherries, raisins, melons such as but not limited to watermelon, cantaloupe, honey dew melon, muskmelon; guava, dates, figs, plums, peaches, nectarines, apricots, kiwi, citrus fruit such as but not limited to orange, lemon, mandarin, clementine, grapefruit, pummelo, lime, tangerine, limonene, Minneola, tangelos, kumquats, ugh fruit, Satsuma oranges; mango, bananas, passion fruit, pineapple, cranberries, blueberries, blackberries, mulberries, lingonberries, huckleberries, redcurrant, gooseberries, raspberries, Strawberries, papaya, coconut, jackfruit, tomato, avocado, olive, and any combinations thereof.

In a preferred embodiment, the fruit is obtained from plants of the *Rutaceae* family, and preferably said fruit is selected from the group comprising orange, lemon, mandarin, clementine, grapefruit, pummelo, lime, tangerine, limonene, Minneola, tangelos, kumquats, ugh fruit, Satsuma oranges and combinations thereof.

In another preferred embodiment, the fruit is obtained from plants of the *Rosaceae* family, and preferably said fruit is selected from the group comprising apples, peaches, apricots, cherries, plums, pears, rosehips, nectarines, blackberry, raspberries, strawberries, and combinations thereof.

In another aspect of the invention, the unroasted natural flavouring plant material used in the present invention is non-fruit plant material.

The term *"non-fruit plant material"* as used herein is intended to refer to any plant or part thereof which is not a fruit as defined herein and which provides a flavour. The term "*non-fruit"* plant material may thus comprise but is not limited to leafs (folium), roots (radix), barks (cortex), branches, blossoming branches, rootstocks (rhizoma), root and herb (radix cum herba), stalks, the whole plant, tuber (tuber), bulb (bulbus), pericarpium, stramentum, flowers (flos), leafs and bloom (folium cum flores), stipites, stigma, lignum, strobulus, thallus, aboveground parts, blossoming aboveground parts, underground parts, and/or parts of this and/or mixtures thereof. One of skill in the art would recognize that the present invention may be practiced with any plant that is cultivated, organic, a hybrid cross, or a wild cultivar.

In a more particular embodiment, the non-fruit plant material specifically includes herbs, spices, leaves, flowers, grasses, molasses, and mixtures thereof.

In another embodiment, the non-fruit material includes molasses, e.g. molasses originating from sugar beet or sugar cane. This type of unroasted natural flavouring plant material enables to increase sweetness and/or sugar content of treated cocoa beans.

In one embodiment, the non-fruit plant material is an herb. *"Herbs"* as used herein are intended to refer to leafy plant parts. There are no limitations towards to form wherein the herb is added to the cocoa beans. Said herb may e.g.

be added as a whole, cut in pieces, either dried or not, either diluted or not, as an extract, as a concentrate, and any combinations thereof.

Herbs which may be used in a method of the present invention can be selected from the group comprising angelica, basil, holy basil, Thai basil, bay leaf, boldo, Bolivian coriander, borage, cannabis, chervil, Chives, Cicely, Coriander leaf (cilantro), Cress, Curry leaf, Dill, Elsholtzia ciliate, Epazote, Eryngium foetidum (long coriander), eucalyptus, fennel, sweet fennel, Hoja santa, Houttuynia cordata, Hyssop, Lavender, Lemon balm, Lemon grass, Lemon verbena, Limnophila aromatica (rice paddy herb), Lovage, Marjoram, Mint, peppermint, spearmint, Mitsuba, Oregano, Parsley, Perilla *(shiso),* Rosemary, Rue, Sage, Savory, Sorrel, Stevia, Tarragon, Thyme, Vietnamese coriander, Woodruff and combinations thereof.

In another embodiment, the non-fruit plant material is a spice. The term *"spice"* used herein is intended to refer to "dried" plant parts such as but not limited to leafs, roots, bark, seeds, flowers, root bark, inner bark (cambium), and sometimes the pericarp of a plant. There are no limitations towards to form wherein said spice is added to the cocoa beans. Said spice may e.g. be added as a whole, cut in pieces, either dried or not, either diluted or not, as an extract, as a concentrate, and any combinations thereof.

Spices which may be used in a method of the present invention can be selected from the group comprising Ajwain (bishop's weed), Aleppo pepper, Allspice, Amchur (mango powder), Anise, Aromatic ginger, Asafoetida, Camphor, Caraway, Cardamom, black Cardamom, Cassia, Cayenne pepper, Celery seed, Chili, Cinnamon, Clove, Coriander seed, Cubeb, Cumin, black Cumin, Dill seed, Fennel, Fenugreek, Fingerroot (krachai), greater Galangal, lesser Galangal, Garlic, Ginger, Grains of Paradise, Grains of Selim, Horseradish, Juniper berry, Liquorice, Mace, Mahlab, Malabathrum (tejpat), black Mustard, brown Mustard, white Mustard, Nigella (kalonji), Nutmeg, Paprika, black Pepper, green Pepper, long Pepper, Brazilian pink Pepper, Peruvian Pink pepper, white Pepper, pomegranate seed (anardana), Poppy seed, Saffron, Sarsaparilla, Sassafras, Sesame, Sichuan pepper, Star anise, Sumac, Tasmanian pepper, Tamarind, Tonka bean, Turmeric, Vanilla, Wasabi, Zedoary, and combinations thereof.

In a preferred embodiment the present method encompasses the use of a herb or of a spice which is obtained from plants of the family *Lamiaceae (Labiatae* or the mint family), and preferably selected from the group comprising basil, lemon balm, mint, peppermint, rosemary, sage, savory, marjoram, oregano, thyme, lavender, and perilla and combinations thereof.

In another embodiment, the non-fruit plant material is a plant leaf. There are no limitations towards to form wherein said leaves are added to the cocoa beans. Leaves which can be used in a method-of the present invention are selected from the group comprising but not limited to leaves from tea and other leaves of trees such as but not limited to oak, pine, red maple, sugar maple, black walnut, etc., and any combinations thereof.

In a preferred embodiment, leaves are obtained from plants of the family *Theaceae,* preferably from the order of *Camellia* and more preferably selected from the group comprising *C. sinensis, C. taliensis* and *C. irrawadiensis* and combinations thereof.

In still another embodiment the non-fruit plant material is a grass. There are no limitations towards to form wherein said grasses are added to the cocoa beans. Grasses for use in the present method may be chosen from the group comprising lemon grass, cereal grasses, and other edible grasses and any combinations thereof.

In still another embodiment the non-fruit plant material is a flower. There are no limitations towards to form wherein said flowers are added to the cocoa beans. Flowers for use in the present method may be chosen from the group comprising flowers of rose, jasmine, lavender, hibiscus, orange flowers, chamomile, passion flower, rosemary flower and any combinations thereof.

In shall be noted that some natural flavouring plant material as enumerated herein can fall under more than one definition. For instance in some embodiments of the invention, natural flavouring plant materials will be considered as herb as well as spice, or some natural flavouring plant materials (e.g. seeds) will be considered fruit as well as spice, or some natural flavouring plant materials will be considered herbs as well as leaves, or herbs as well as grasses, or leaves as well as grasses.

In yet another aspect of the invention, the unroasted natural flavouring plant material used in the present invention consists of a combination of a fruit material and a non-fruit plant material, thus of a A) fruit as defined herein and B) a herb, spice, leave, grass and/or flower as defined herein. Alternatively or in combination therewith, the unroasted natural flavouring plant material used in the present invention may also comprise a combination of different types of non-fruit plant materials as defined herein, thus a combination of herbs, spices, leaves, grasses, and/or flowers.

COCOA PRODUCTS

In yet another aspect, the invention relates to cocoa beans that are obtained or obtainable by carrying out a method according to the invention.

Cocoa beans according to the invention have well-defined and controllable composition, flavour and/or organoleptic properties, and that in particular are high-flavoured cocoa products. Cocoa flavour may be classified according to the following categories: cocoa flavour, acid/sharp, astringent, bitter, raw/green, fragrant/floral, brown fruit, late sour and thick mouth feel. Scores for cocoa beans according to the invention may be assessed on a point system and a high score in a category indicates a strong intensity for a particular flavour.

In addition, the invention relates to cocoa beans that have an amount of one or more components selected from the group comprising:

- aroma compounds, such as sugar alcohols and esters;
- aroma precursors, such as reduced sugars, pyrazines, amino acids, peptides;
- compounds such as gamma-aminobutyric acid (GABA) or phenylethylamine (PEA);
- free amino acid precursors, such as phenylalanine tyrosine, alanine, tryptophan;
- aromatic bioactive molecules such as polyphenols, linalol, anandamide, cycloartenol,
- alkaloid compounds such as theobromine, caffeine,
- polyphenols such as epicatechin, catechin;
- sugars such as sucrose, fructose,
- enzymes such as proteases,
- sugar converting enzymes, such as invertase; and
- carbohydrate converting enzymes, such as amylase;

which amount is in particular higher or lower, and preferably at least 10, 15, 20, 25% higher or lower than in cocoa beans that have not been treated or contacted with a unroasted natural flavouring plant material as defined herein.

In another embodiment, the invention further provides a method as disclosed herein, wherein the cocoa beans of step c) have an amount of components selected from the group comprising aroma compounds, aroma precursor, ester-precursors, free amino acid precursors, aromatic bioactive molecules, alkaloid compounds, sugars, carbohydrates, and enzymes which is at least 10 % higher or at least 10 % lower than the amount in the cocoa beans of step a).

In a preferred embodiment, the invention relates to cocoa beans, having an amount of theobromine which is higher or lower than a value between 10000 and 16000 $\mu$g/g cocoa beans and preferably which is higher or lower than a value between 10404 and 15606 $\mu$g/g cocoa beans.

In another preferred embodiment, the invention relates to cocoa beans having an amount of phenylethylamine which is higher or lower than an amount between 0.02-1.4 ppm.

In another preferred embodiment, the invention relates to cocoa beans having an amount of polyphenol which is higher or lower than an amount between 2.5-7.5 wt%.

The invention in particular relates to cocoa beans that are obtainable or obtained by a method according to the present invention.

FOOD PRODUCTS and EXTRACTS

In yet another aspect, the invention relates to the use of cocoa beans according to the invention for the preparation of food products, e.g. preferably chocolate products, and to food products thereby obtained. For this, cocoa beans according to the invention can be conventionally processed into cocoa products such as cocoa butter, cocoa powder, cocoa liquor, cocoa mass, and further introduced in food products. The high-flavoured cocoa beans according to the invention are particularly suitable for the production of high-flavoured food products.

The term "food product" is used herein in a broad sense, and covers food for humans as well as food for animals (i.e. a feed). In a preferred aspect, the food is for human consumption. The food may be in the form of a solution or as a solid, depending on the use and/or the mode of application and/or the mode of administration. Non limitative examples of food products which may be obtained using cocoa beans according to the present invention include for instance chocolate products, chocolate drinks, nutritional beverages, beverage powders, milk-based products, ice cream, confectionery, bakery products such as cakes and cake mixes, fillings, cake glaze, chocolate bakery filling, doughnuts.

In another embodiment, the invention encompasses the use of cocoa beans according to the invention for the preparation of cocoa extracts, and to cocoa extracts thereby obtained. For this, cocoa beans according to the invention can be conventionally processed into cocoa extracts according to techniques known in the art.

Advantageously, the present invention permits to provide cocoa products, such as cocoa beans, cocoa nibs or products derived therefrom such as e.g. cocoa liquor, cocoa mass, cocoa cake, cocoa powder, cocoa extracts, that have acquired the flavour and aroma of the unroasted natural plant material with which they have been contacted.

Even more, the present invention permits to transfer the flavour and aroma of the unroasted natural plant material to products, e.g. to food products such as baked products, beverages, and confectionary, chocolate, chocolate drinks, beverage powders, ice cream, confectionery, biscuits cakes and cake mixes, snack foods, fillings, cake glaze, chocolate bakery filling, cake fillings, cake and doughnut icing, instant bakery filling creams, filing for cookies, ready-to-use bakery filling, reduced calorie filling, etc.., prepared with the cocoa products or the products derived therefrom.

Moreover, the present method not only permits to provide highly flavoured cocoa beans and products derived there from, but also provides cocoa beans which show unexpected properties. More in particular, the flavoured cocoa beans obtained or obtainable according to the present method are surprisingly easy to process, for example the beans can easily be split into cocoa components, i.e. mass, liquor, powder etc. In addition, cocoa powders made from flavoured cocoa beans obtained or obtainable according to the present method have an improved color and are surprisingly easy to mix with other materials. For instance they do not agglomerate as readily as conventional powders or powders comprising synthetic flavouring ingredients. Drinks made from cocoa powders of flavoured cocoa beans obtained or obtainable according to the present invention have improved flavour profiles, stability and appearance.

Food products comprising cocoa beans or derived products thereof have improved characteristics, including for instance improved storage stability, improved organoleptic properties such as for instance a better flavour profile, better flavour release, and improved appearance such as for instance a better color, better gloss and bloom resistance, than equivalent products made without flavours or with synthetic flavours.

In particular, chocolate masses made from cocoa beans or products derived thereof are easier to process. For instance they have surprisingly good flow characteristics, they are easier to conche and temper than conventional masses, have improved demoulding properties.

The present invention will be described in greater detail below with the aid of the examples which follow. It goes without saying, however, that these examples are given by way of illustration of the invention and do not constitute in any manner a limitation thereof.

## EXAMPLES

### Example 1: Treatment of unfermented beans with citrus fruits

Freshly harvested ripe pods were opened and the cocoa beans (Lavados beans) were removed. 1 kg of oranges or of lemons were mixed in a mixer.

In a first experiment the mixed oranges or lemons were added to 10kg of said unfermented cocoa beans. The fruit fluid was allowed to diffuse inside the beans and bean samples, the beans and the fruit was kept at a temperature of 20 to 35 °C and beans were taken every day during 4 days and dried. The dried beans were then deshelled and tasted by a taste panel.

In a second experiment, the juice of mixed oranges or lemons was recuperated and diluted at a ratio of juice: water of 1:1. The diluted fruit juice was allowed to diffuse inside the beans, the beans and the diluted fruit juice was kept at a temperature of 20 to 35°C and bean samples were taken every day during 4 days and dried. The dried beans were then deshelled and tasted by a taste panel.

Results indicated that for both experiments the obtained cocoa beans tasted like the orange or lemon fruit that was used to prepare the flavoured beans. Cocoa beans with a citrus, i.e. orange or lemon flavour were thus obtained.

Chocolates were produced using the flavoured cocoa beans from both experiments, and it was further shown that the citrus flavour added to the cocoa beans was not lost during the further processing of cocoa beans, but that also the chocolate prepared with said flavoured beans obtained this citrus, i.e. orange or lemon flavour.

In a third experiment, 1 kg of oranges or lemons were mixed in a mixer. The obtained mixtures were transferred into a vessel. 10Kg of beans were transferred into the vessel and the vessel was closed. A grid was installed in the vessel to separate the cocoa bean from the mixed oranges or mixed lemons such that the cocoa beans where not in direct contact with the mixed oranges or mixed lemons. However, there was air contact between the mixed oranges or the mixed lemons and the cocoa beans in the vessel. An incubation of 12h at 50°C was performed.

After incubation the cocoa beans contain the aroma from the oranges or lemons, indicating that no direct contact is required between the fruit material and the cocoa beans to have a diffusion of the citrus flavours to the cocoa beans.

Cocoa liquor was produced using the flavoured cocoa beans, and it was further shown that the citrus flavour added to this liquor also the obtained the orange or lemon flavour, indicating that the added flavour was not lost during the further processing of flavoured cocoa beans.

### Example 2: Treatment of unfermented beans with Tea leaves

Treatment of unfermented beans with tea leaves *(Camellia sinensis)* can be performed as follows. A tea extract is made by suspending a handful tea leaves in hot (50°C) water. The tea extract is then added to cocoa beans and allowed to diffuse inside the beans. The beans and the tea extract are kept at a temperature of 20 to 35°C and bean samples are taken every day during 4 days and dried. The dried beans can then be deshelled and tasted by a taste panel.

*Example* 3: *Treatment of unfermented beans with peppermint*

Treatment of unfermented beans with peppermint leaves can be performed as follows. An extract of peppermint is made by suspending a handful peppermint leaves in hot (50°C) water. The extract is then added to cocoa beans and allowed to diffuse inside the beans. The beans and the extract are kept at a temperature of 20 to 35 °C and bean samples are taken every day during 4 days and dried. The dried beans can then be deshelled and tasted by a taste panel.

*Example 4: Treatment of unfermented beans with flowers*

Treatment of unfermented beans with flowers of chamomile can be performed as follows. An extract of flowers of chamomile is made by suspending a handful flowers in hot (50°C) water. The extract is added to cocoa beans and allowed to diffuse inside the beans. The beans and the extract are kept at a temperature of 20 to 35 °C and bean samples are taken every day during 4 days and are dried. The dried beans can then be deshelled and tasted by a taste panel.

*Example 5: Treatment of unfermented beans with a grass*

Treatment of unfermented beans with lemon grass can be performed as follows. An extract of lemongrass is made by suspending lemongrass in hot (50°C) water. The extract is added to cocoa beans and allowed to diffuse inside the beans. The beans and the extract are kept at a temperature of 20 to 35°C and bean samples are taken every day during 4 days and are dried. The dried beans can then be deshelled and tasted by a taste panel.

*Example* 6: *Treatment of unfermented and fermented beans with oranges*

In the present examples unfermented beans and fermented beans were both treated with unroasted natural flavouring plant material derived from oranges.
The unfermented beans consisted of freshly harvested ripe pods that were opened and from which the cocoa beans were removed. The fermented beans consisted of beans of conventionally fermented beans showing not visual defects. The fermented and unfermented beans were both dried by sun-drying and subsequently treated with the unroasted natural flavouring plant material in a same way as explained below.
The unroasted plant material consisted either of:

A) 2 kg of full oranges, i.e. peel and fruit flesh;

B) 1.5kg of orange fruit flesh (this is equivalent to 2 kg of full oranges); or

C) 0.5kg of orange peel this is equivalent to 2 kg of full oranges).

Each type of plant material (A, B or C) was cut into small pieces and thoroughly mixed during five minutes to obtain a homogenous mass. The mixed materials were then diluted by admixing four litres of water thereto to yield three types of diluted fruit liquids. In this experiment the orange material was diluted at a ratio of orange material : water of respectively 1:2 ; 1.5:4 and 0.5:4 and the concentration of the diluted unroasted plant material hence respectively comprised 0.33 wt%; 0.27 wt% and 0.11 wt%.
10 kg of the dried beans were mixed with four liter of the diluted plant material prepared as described above. The weight ratio of cocoa beans to unroasted plant material respectively comprised 10:2 ; 10:1.5 ; and 10:0.5. The fruity liquids were each allowed to diffuse inside the beans during maximum 24hours. The beans and the fruity liquids were kept together in a vessel at a temperature of 25°C during 24 hours. During the first 8 hours, the beans and the liquids were regularly agitated.
In this example the kinetics of diffusion of the fruity liquids in the dried beans was studied. For this, beans samples were taken every 30 minutes during the first 4 hours of the experiment, and then at 6, 8, and 24 hours. These bean samples were analysed to determine the humidity (moisture) content of the re-hydrated beans. Every sample consisted of about 20 beans. The beans were milled. 10 grams of the milled beans were weighted before and after drying in an oven at 101°C during 24 hours. The humidity content (in %) was calculated based on this data by the fomula:

$$\text{Humidity content} = \{ 1 - [ (W_{db} - W_{wb}) / W_{wb}] \} \times 100$$

whereby $W_{wb}$ is the weight of the wet beans, i.e. the milled beans before drying and $W_{db}$ the weight of the dried beans, i.e. the milled beans after drying in the oven.

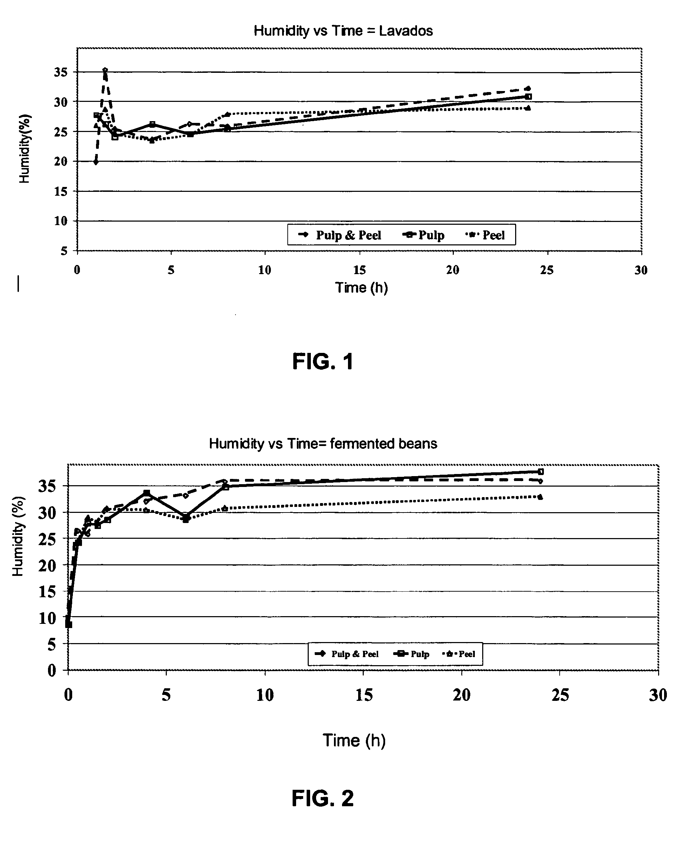

Results of this experiment are illustrated in **figures 1 and 2.** Figures 1 and 2 illustrate that in the three analogous experiments, fluid absorption reached a peak after about 2 hours and thereafter slightly increased from about 25% after 4 hours to about 30 % after 24 hours for the unfermented beans (figure 1) and from about 30% after 4 hours to about 35 % after 24 hours for the fermented beans (figure 2). The Applicants showed that during the first 3 to 4 hours of admixing a liquid plant material to the cocoa beans the highest amount of liquid is taken up by the beans, and that an optimal amount of moisture of the beans is comprised between 20 to 40 %, and preferably between 25 and 30%. The present experiment also illustrates that fermented beans are more quickly rehydrated with the plant material in liquid form than the unfermented beans, i.e. they take up the liquids more rapidly.

## Example 7: Taste analyses of unfermented and fermented beans treated with oranges

The beans as treated in example 6 were subjected to taste analyses. For that, samples as treated in example 6 of the beans were taken at time points of 2, 4, 6, 8 and 24 hours after treatment with the liquids. Samples consisted of about 500 beans. Sampled beans were dried in the sun. Then the beans were roasted in an oven at 140 °C for 30 min. The roasted beans were ground and a cocoa liquor was prepared thereof.

The flavours generated by the roasting were then evaluated by a panel of five individuals used to evaluating such flavours. Scores were assessed on a point system from 0 to 5. A high score in a category indicated a strong intensity of a particular flavour. Each sample was evaluated for the following sensations: "acidity"; "bitterness"; "astringency"; "Alkalinity"; "chocolate"; "Grilled/roasted"; "fruity"; "Aromatic"; "wine", "earthy" ; "mouldy" ; "smoky"; "Hay/Wood/immature" (i.e. corresponding to off flavors).

The results indicate that cocoa beans that have been treated with unroasted plant material according to a process of the invention provide cocoa liquor with a good and suitable taste. The taste panel reported that the obtained cocoa liquor had a pleasant orange-like flavour for the three experiments, although the taste of the beans diffused with the diluted material A (full oranges) was slightly better. Taste comments that were attributed by the taste panel to the tasted material included comments such as *inter alia* "aromatic orange"; "pronounced bitter orange taste"; taste of orange blossom". Similar results were obtained from unfermented and for fermented beans.

The orange-like taste is not lost during the roasting process, which indicates that the added flavour was not lost during the further processing of flavoured cocoa beans. Moreover, the taste panel results showed that off flavours are no longer present after the treatment with the oranges.

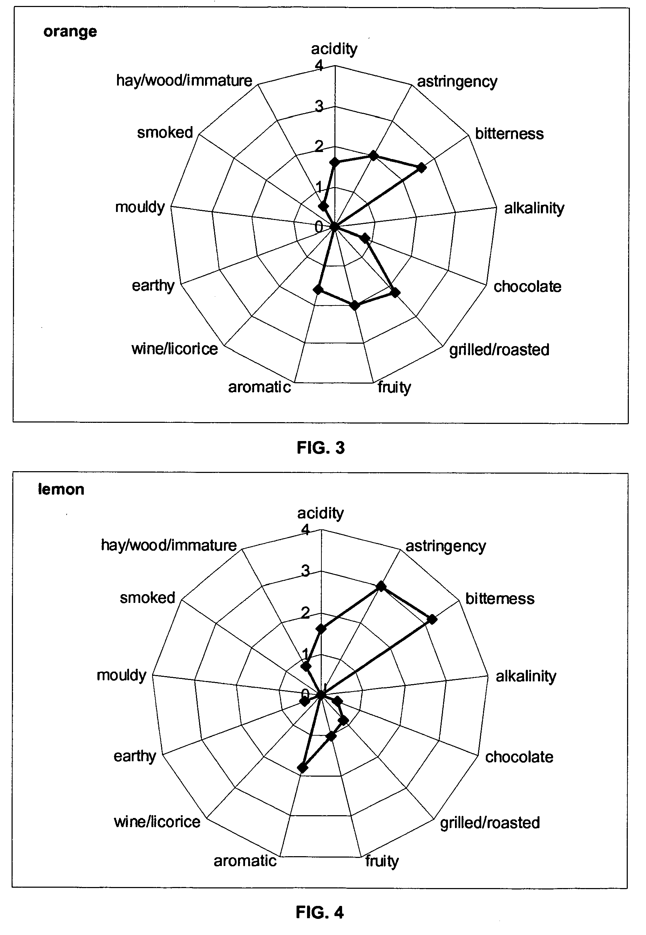

**Figure 3** shows the results of the taste panel experiment carried out on the unfermented beans that have been treated with the liquid prepared from the full oranges (material A) during 24 hours.

In conclusion, this experiment indicates that by applying the process of the present invention cocoa beans can be obtained that taste like the orange that was used to prepare the flavoured beans. This is rather unexpected in view of the limited period of co-treatment of the cocoa beans with the fruity material (maximum 24 hours in this experiment).

## Example 8: Taste analyses of unfermented and fermented beans treated with lemons

Unfermented and conventionally fermented beans were treated as in a same way as described in example 6 with the difference that the oranges were replaced by lemons, i.e. full lemons, (material A), lemon fruit flesh (material B) and lemon peel (material C) were used in the experiment at the same concentrations and ratios as given in example 6.

The treated beans were then subjected to taste analyses in a same way as explained in example 7. Results of these tests indicate that cocoa beans that have been treated with unroasted lemon plant material according to a process of the invention provide cocoa liquor with a good and suitable taste. The taste panel reported that the obtained cocoa liquor had a pleasant lemon-like flavour for the three experiments, although the taste of the beans diffused with the diluted material A (full lemons) was slightly better. Taste comments that were attributed by the taste panel to the tasted material included comments such as *inter alia* "flavour of lemon drop", "lemon flavour", and "odour of lemon zest". Similar results were obtained from unfermented and for fermented beans.

**Figure 4** shows the results of the taste panel experiment carried out on the unfermented beans that have been treated with the liquid prepared from full lemons (material A) during 24 hours.

## Example 9: Taste analyses of unfermented and fermented beans treated with mint

Unfermented and conventionally fermented beans were treated in a same way as described in example 3. In particular, an extract of mint was made by suspending a handful leaves in hot (50°C) water for 5 to 10 minutes. The extract was then added to the cocoa beans and allowed to diffuse inside the beans for about 12 to 24 hours. The beans and the extract were kept at a temperature of 25°C to 30°C and bean samples were taken and dried in the sun. The dried beans were then roasted in an oven at 140 °C for 30 min. The roasted beans were ground and a cocoa liquor was prepared thereof. The flavours generated by the roasting were then evaluated by a panel of five individuals used to evaluating such flavours in a same way as explained in example 7.

Results of these tests indicate that cocoa beans that have been treated with unroasted mint plant material according to a process of the invention provide cocoa liquor with a good and suitable taste. The taste panel reported that the obtained cocoa liquor had a pleasant mint-like flavour. Taste comments that were attributed by the taste panel to the tasted material included comments such as *inter alia* "cassis menthol"; "liquorice taste"; "taste of liquorice perfume"; "menthol odour, bitter mentholated taste"; "mint liquor such as very strong 'after eight' taste". Similar results were obtained from unfermented and for fermented beans.

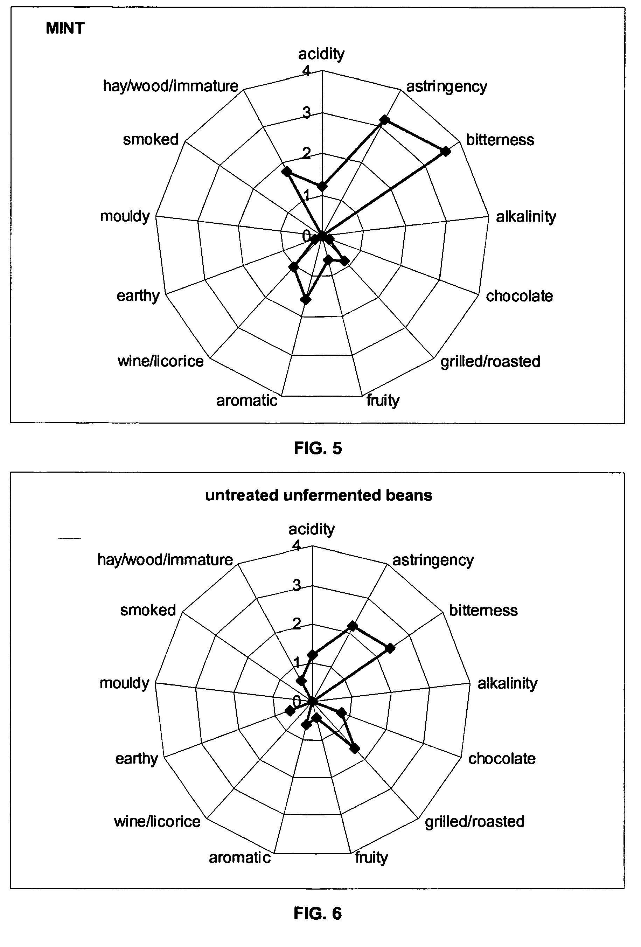

**Figure 5** shows the results of the taste panel experiment carried out on the unfermented beans that have been treated with a mint extract during 24 hours.

For comparison, **Figure 6** shows the results of a taste panel experiment conducted on unfermented cocoa beans that have not been treated with an unroasted natural flavouring plant material.

*Example 10: Treatment of unfermented beans with ginger and cinnamon*

Other experiments were performed with ginger (roots) and cinnamon (sticks).

Unfermented and conventionally fermented beans were treated as in a same way as described for material A in example 6, with the difference that the oranges were replaced by ginger roots. Thus, ginger roots were used at a same concentration and ratio as given in example 6 for material A. The treated beans were then subjected to taste analyses in a same way as explained in example 7. Results of these tests indicate that when tasting beans treated for 24 hours, the ginger taste/flavour had diffused in the treated beans. Similar results were obtained from unfermented and for fermented beans.

For the cinnamon, powder was prepared from cinnamon sticks and suspended in water for 5 to 10 minutes. The extract was then added to the cocoa beans and allowed to diffuse inside the beans. The beans and the extract were kept at a temperature of 25°C to 30°C for 24hours. Bean samples were then taken and dried in the sun. The dried beans were then roasted in an oven at 140 °C for 30 min. The roasted beans were ground and a cocoa liquor was prepared thereof. The flavours generated by the roasting were then evaluated by a panel of five individuals used to evaluating such flavours in a same way as explained in example 7. Results of these tests indicate that when tasting beans treated for 24 hours, the cinnamon taste/flavour had diffused in the treated beans. Similar results were obtained from unfermented and for fermented beans.

**Claims**

1. Method for flavouring cocoa beans comprising the steps:

    a) providing dried cocoa beans,
    b) contacting said dried cocoa beans with unroasted natural flavouring plant material, and
    c) separating the cocoa beans from said unroasted natural flavouring plant material.

2. Method according to claim 1, wherein said dried cocoa beans are contacted with said unroasted natural flavouring plant material for less than four days.

3. Method according to claim 1 or 2, wherein said dried cocoa beans are contacted in step b) with said unroasted natural flavouring plant material at a temperature of between 20 and 120 °C.

4. Method according to any of claims 1 to 3, further comprising the step of drying the cocoa beans obtained in step c).

5. Method according to any of claims 1 to 4, wherein said unroasted natural flavouring plant material is applied in the form of an aqueous solution of said material.

6. Method according to any of claims 1 to 5, wherein said unroasted natural flavouring plant material is selected from the group comprising fruits, herbs, leaves, grasses, spices, flowers and any combinations thereof.

7. Method according to any of claims 1 to 6, wherein said unroasted natural flavouring plant material is a fruit and consists of fruit juice, a fruit extract, a fruit concentrate, whole fruits and/or fruit segments.

8. Method according to claim 7, wherein said fruit is obtained from plants of the *Rutaceae* family, and preferably selected from the group comprising orange, lemon, mandarin, clementine, grapefruit, pummelo, lime, tangerine, limonene, Minneola, tangelos, kumquats, ugh fruit, Satsuma oranges and combinations thereof.

9. Method according to any of claims 1 to 6, wherein said unroasted natural flavouring plant material is a non-fruit plant material selected from the group comprising herbs, spices, leaves, grasses, flowers and any combinations thereof.

10. Method according to claim 9, wherein said herb or said spice is obtained from plants of the family *Lamiaceae,* and preferably selected from the group comprising basil, lemon balm, mint, peppermint, rosemary, sage, savory, marjoram, oregano, thyme, lavender, and perilla.

11. Method according to claim 9 wherein said leaves are obtained from plants of the family *Theaceae,* preferably the order of *Camellia* and more preferably selected from the group comprising *C. sinensis, C. taliensis* and *C. irrawadiensis.*

12. Method according to claim 9 wherein said flowers are obtained from the group comprising flowers of rose, jasmine, lavender, hibiscus, orange flowers, chamomile, passion flower, rosemary flower and any combinations thereof.

13. Method according to any of claims 1 to 12, wherein the cocoa beans of step c) have an amount of components selected from the group comprising aroma compounds, aroma precursor, ester-precursors, free amino acid precursors, aromatic bioactive molecules, alkaloid compounds, sugars, carbohydrates, and enzymes which is at least 10 % higher or at least 10 % lower than the amount in the cocoa beans of step a).

14. Flavoured cocoa beans having an amount of components selected from the group comprising aroma compounds, aroma precursor, ester-precursors, free amino acid precursors, aromatic bioactive molecules, alkaloid compounds, sugars, carbohydrates, and enzymes which is at least 10 % higher or at least 10 % lower than in cocoa beans that have not been contacted with unroasted natural flavouring plant material.

15. Cocoa beans according to claim 14 obtainable by a method according to any of claims 1 to 13.

**Patentansprüche**

1. Verfahren zum Aromatisieren von Kakaobohnen umfassend die Schritte:

   a) Bereitstellen getrockneter Kakaobohnen,
   b) in Kontakt bringen der getrockneten Kakaobohnen mit ungeröstetem natürlich aromatisierendem Pflanzenmaterial und
   c) Trennen der Kakaobohnen von dem ungerösteten natürlich aromatisierenden Pflanzenmaterial.

2. Verfahren nach Anspruch 1, wobei die getrockneten Kakaobohnen mit dem ungerösteten natürlich aromatisierenden Pflanzenmaterial weniger als vier Tage in Kontakt gebracht werden.

3. Verfahren nach Anspruch 1 oder 2, wobei die getrockneten Kakaobohnen in Schritt b) mit dem ungerösteten natürlich aromatisierenden Pflanzenmaterial bei einer Temperatur zwischen 20 und 120 °C in Kontakt gebracht werden.

4. Verfahren nach einem der Ansprüche 1 bis 3, das zusätzlich den Schritt des Trocknens der in Schritt c) erhaltenen Kakaobohnen umfasst.

5. Verfahren nach einem der Ansprüche 1 bis 4, wobei das ungeröstete natürlich aromatisierende Pflanzenmaterial in Form einer wässrigen Lösung des Materials eingesetzt wird.

6. Verfahren nach einem der Ansprüche 1 bis 5, wobei das ungeröstete natürlich aromatisierende Pflanzenmaterial ausgewählt wird aus der Gruppe umfassend Früchte, Kräuter, Blätter, Gräser, Gewürze, Blüten und beliebigen Kombinationen davon.

7. Verfahren nach einem der Ansprüche 1 bis 6, wobei das ungeröstete natürlich aromatisierende Pflanzenmaterial eine Frucht ist und aus Fruchtsaft, einem Fruchtextrakt, einem Fruchtkonzentrat, ganzen Früchten und/oder Fruchtsegmenten besteht.

8. Verfahren nach Anspruch 7, wobei die Frucht von Pflanzen der Familie *Rutaceae* erhalten wird und vorzugsweise ausgewählt wird aus der Gruppe umfassend Orange, Zitrone, Mandarine, Klementine, Grapefruit, Pampelmuse, Limette, Tangerine, Limonen, Minneola, Tangelos, Kumquats, Stinkfrucht, Satsuma Orangen und Kombinationen davon.

9. Verfahren nach einem der Ansprüche 1 bis 6, wobei das ungeröstete natürlich aromatisierende Pflanzenmaterial ein nicht fruchtiges Pflanzenmaterial ist, das ausgewählt wird aus der Gruppe umfassend Kräuter, Gewürze, Blätter, Gräser, Blüten und beliebigen Kombinationen davon.

10. Verfahren nach Anspruch 9, wobei das Kraut oder das Gewürz von Pflanzen der Familie *Lamiaceae* erhalten wird und vorzugsweise ausgewählt wird aus der Gruppe umfassend Basilikum, Zitronenmelisse, Minze, Pfefferminze, Rosmarin, Beifuß, Bohnenkraut, Majoran, Oregano, Thymian, Lavendel und Perilla.

11. Verfahren nach Anspruch 9, wobei die Blätter von Pflanzen der Familie Theaceae erhalten werden, vorzugsweise der Ordnung *Camellia* und besonders bevorzugt ausgewählt aus der Gruppe umfassend *C. sinensis, C. taliensis* und *C. irrawadiensis.*

12. Verfahren nach Anspruch 9, wobei die Blüten erhalten werden aus der Gruppe umfassend Rosenblüten, Jasmin, Lavendel, Hibiskus, Orangenblüten, Chamomille, Passionsblume, Rosmarinblüte und beliebigen Kombinationen davon.

13. Verfahren nach einem der Ansprüche 1 bis 12, wobei die Kakaobohnen aus Schritt c) einen Gehalt an Bestandteilen ausgewählt aus der Gruppe umfassend Aromabestandteile, Aromavorläufer, Estervorläufer, freie Aminosäurevorläufer, aromatische bioaktive Moleküle, Alkaloidverbindungen, Zucker, Kohlenhydrate und Enzyme aufweisen, der mindestens 10 % höher oder mindestens 10 % geringer ist als der Gehalt in den Kakaobohnen aus Schritt a).

14. Aromatisierte Kakaobohnen, die einen Gehalt von Bestandteilen ausgewählt aus der Gruppe umfassend Aromabestandteile, Aromavorläufer, Estervorläufer, freie Aminosäurevorläufer, aromatische bioaktive Moleküle, Alkaloidverbindungen, Zucker, Kohlenhydrate und Enzyme aufweisen, der mindestens 10 % höher oder mindestens 10 % geringer ist als in Kakaobohnen, die nicht mit ungeröstetem natürlich aromatisierendem Pflanzenmaterial in Kontakt gebracht wurden.

15. Kakaobohnen nach Anspruch 14 erhältlich durch ein Verfahren nach Anspruch 1 bis 13.

**Revendications**

1. Méthode pour l'aromatisation des fèves de cacao comprenant les étapes suivantes:

   a) fournir des fèves de cacao séchées,
   b) mettre en contact lesdites fèves de cacao séchées avec une matière végétale aromatisante naturelle non torréfiée, et
   c) séparer les fèves de cacao de ladite matière végétale aromatisante naturelle non torréfiée.

2. Méthode selon la revendication 1, dans laquelle lesdites fèves de cacao séchées sont mises en contact avec ladite matière végétale aromatisante naturelle non torréfiée pendant moins de quatre jours.

3. Méthode selon la revendication 1 ou 2, dans laquelle lesdites fèves de cacao séchées sont mises en contact dans l'étape b) avec ladite matière végétale aromatisante naturelle non torréfiée à une température comprise entre 20 et 120°C.

4. Méthode selon l'une quelconque des revendications 1 à 3, comprenant en outre l'étape de séchage des fèves de cacao obtenues à l'étape c).

5. Méthode selon l'une quelconque des revendications 1 à 4, dans laquelle ladite matière végétale aromatisante naturelle non torréfiée est appliquée sous la forme d'une solution aqueuse de ladite matière.

6. Méthode selon l'une quelconque des revendications 1 à 5, dans laquelle ladite matière végétale aromatisante naturelle non torréfiée est sélectionnée parmi le groupe comprenant fruits, herbes, feuilles, graminées, épices, fleurs et l'une quelconque des combinaisons de ceux-ci.

**7.** Méthode selon l'une quelconque des revendications 1 à 6, dans laquelle ladite matière végétale aromatisante naturelle non torréfiée est un fruit et consiste en du jus de fruit, un extrait de fruit, un concentré de fruit, des fruits entiers et/ou des quartiers de fruit.

**8.** Méthode selon la revendication 7, dans laquelle ledit fruit est obtenu à partir de plantes de la famille des *Rutaceae,* et de préférence sélectionné parmi le groupe comprenant orange, citron, mandarine, clémentine, pamplemousse, pomélo, citron vert, tangerine, limonène, Minneola, tangelo, kumquats, ugli, oranges Satsuma et les combinaisons de ceux-ci.

**9.** Méthode selon l'une quelconque des revendications 1 à 6, dans laquelle ladite matière végétale aromatisante naturelle non torréfiée est une matière végétale qui n'est pas un fruit, sélectionnée parmi le groupe comprenant herbes, épices, feuilles, graminées, fleurs et l'une quelconque des combinaisons de celles-ci.

**10.** Méthode selon la revendication 9, dans laquelle ladite herbe ou ladite épice est obtenue à partir de plantes de la famille des *Lamiaceae,* et de préférence sélectionnée parmi le groupe comprenant basilic, mélisse, menthe, menthe poivrée, romarin, sauge, sarriette, marjolaine, origan, thym, lavande et périlla.

**11.** Méthode selon la revendication 9, dans laquelle lesdites feuilles sont obtenues à partir de plantes de la famille des *Theaceae,* de préférence de l'ordre des *Camellia* et encore plus de préférence sélectionnées parmi le groupe comprenant C. *sinensis,* C. *taliensis* et C. *irrawadiensis.*

**12.** Méthode selon la revendication 9, dans laquelle lesdites fleurs sont obtenues parmi le groupe comprenant fleurs de rose, de jasmin, de lavande, d'hibiscus, fleurs d'orangers, camomille, fleur de la passion, fleur de romarin, et l'une quelconque des combinaisons de celles-ci.

**13.** Méthode selon l'une quelconque des revendications 1 à 12, dans laquelle les fèves de cacao de l'étape c) ont une quantité de composés sélectionnés parmi le groupe comprenant composés d'arôme, précurseurs d'arôme, précurseurs d'ester, précurseurs d'acides aminé libre, molécules bioactives aromatiques, composés alcaloïdes, sucres, glucides, et enzymes, qui est au moins de 10% supérieure ou au moins de 10% inférieure à la quantité dans les fèves de cacao de l'étape a).

**14.** Fèves de cacao aromatisées ayant une quantité de composés sélectionnés parmi le groupe comprenant composés d'arôme, précurseurs d'arôme, précurseurs d'ester, précurseurs d'acides aminé libre, molécules bioactives aromatiques, composés alcaloïdes, sucres, glucides, et enzymes, qui est au moins de 10% supérieure ou au moins de 10% inférieure à celle des fèves de cacao qui n'ont pas été en mises en contact avec de la matière végétale aromatisante naturelle non torréfiée.

**15.** Fèves de cacao selon la revendication 14 pouvant être obtenues par une méthode selon l'une quelconque des revendications 1 à 13.

Humidity vs Time = Lavados

**FIG. 1**

Humidity vs Time= fermented beans

**FIG. 2**

**FIG. 3**

**FIG. 4**

**MINT**

**FIG. 5**

**untreated unfermented beans**

**FIG. 6**